(19) Europäisches Patentamt
European Patent Office
Office européen des brevets

(11) **EP 4 622 078 A1**

(12) **EUROPEAN PATENT APPLICATION**

(43) Date of publication:
**24.09.2025 Bulletin 2025/39**

(21) Application number: **24164336.0**

(22) Date of filing: **19.03.2024**

(51) International Patent Classification (IPC):
$H02M\ 1/00^{(2006.01)}$     $H02M\ 3/155^{(2006.01)}$
$H02M\ 3/158^{(2006.01)}$     $H02M\ 1/32^{(2007.01)}$
$H02M\ 1/36^{(2007.01)}$     $H02M\ 1/10^{(2006.01)}$

(52) Cooperative Patent Classification (CPC):
**H02M 3/158; H02M 1/0095; H02M 1/10;**
**H02M 1/325; H02M 1/36; H02M 3/1557;**
H02M 1/0045; H02M 1/007; H02M 1/008

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Tridonic GmbH & Co. KG**
**6851 Dornbirn (AT)**

(72) Inventors:
• **STAINTHORPE, Ben**
 **Newcastle upon Tyne, NE1 7RU (GB)**

• **PICKERT, Volker**
 **Newcastle upon Tyne, NE1 7RU (GB)**
• **DAHIDAH, Mohamed**
 **Newcastle upon Tyne, NE1 7RU (GB)**
• **SHUKLA, Jagjitpati**
 **6850 Dornbirn (AT)**
• **MAKWANA, Deepak**
 **6850 Dornbirn (AT)**

(74) Representative: **Rupp, Christian**
**Mitscherlich PartmbB**
**Patent- und Rechtsanwälte**
**Karlstraße 7**
**80333 München (DE)**

(54) **INTEGRATED BOOST-SEPIC CONVERTER FOR LOW-VOLTAGE POWER SUPPLY**

(57) Disclosed is an integrated boost-sepic converter (1A, 1B). The converter (1A, 1B) comprises a first inductance (101, $L_1$) and a voltage control element (102), arranged serially between an input potential ($V_{in}$) and a ground potential of the converter (1A, 1B). The converter (1A, 1B) further comprises a first capacitance (103, $C_1$) and a second inductance (104, $L_2$), arranged serially in parallel to the voltage control element (102). The converter (1A, 1B) further comprises a first diode (105, $D_0$), arranged between a first low-voltage output potential ($V_{out,\mu C}$ of the converter (1A, 1B) and a common potential of the first capacitance (103, $C_1$) and the second inductance (104, $L_2$). The converter (1A, 1B) further comprises a second diode (108, $D_{int}$), arranged between a second low-voltage output potential ($V_{out,GD}$) of the converter (1A, 1B) and a common potential of the first inductance (101, $L_1$) and the voltage control element (102, $S_1$). The converter (1A, 1B) is configured to regulate the first low-voltage output potential ($V_{out,\mu C}$) of the converter (1A, 1B) in dependence of the input potential ($V_{in}$) of the converter (1A, 1B); and to provide the second low-voltage output potential ($V_{out,GD} = V_{in} + V_{out,\mu C}$) of the converter (1A, 1B) as a sum of the input potential ($V_{in}$) and the first low-voltage output potential ($V_{out,\mu C}$). This avoids a cascaded LVPS design.

FIG. 4

EP 4 622 078 A1

**Description**

**Technical Field**

The present disclosure relates generally to the field of lighting technology, and more particularly to an integrated boost-sepic converter and to various emergency LED drivers comprising the same.

**Background Art**

Emergency LED drivers require a regulated supply from battery to microcontroller, and a boosted supply from battery for the gate drivers. Additionally, the battery must be charged from mains supply.

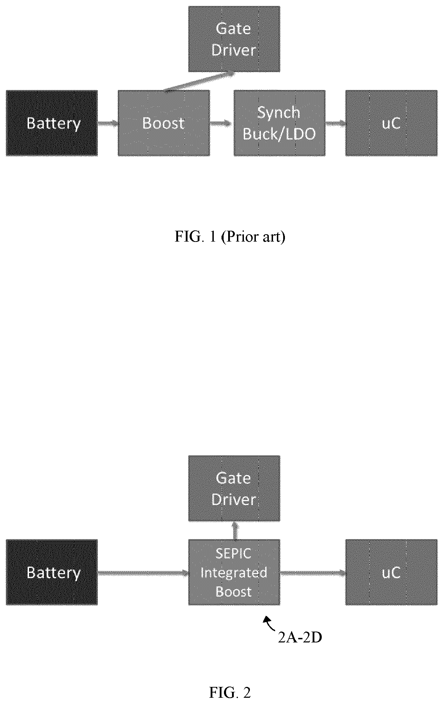

Known solutions use cascaded boost and synchronous buck (or LDO) topologies (see FIG. 1) to generate a regulated voltage (e.g., 3.3V) and a boosted voltage (e.g., 6V) from a battery voltage (e.g., 2.7-3.6V). The boost converter is bidirectional and can operate as a buck converter in the reverse direction to charge the battery.

The use of an LDO in emergency operation results in very lossy conversion, when efficiency is critical.

The use of a synchronous buck has higher efficiency but requires either additional controllers and gate drives etc. or a switching regulator chip which can be costly and may cause supply chain issues due to not being discrete and readily available.

The synchronous buck option features multiple switches and diode between the battery and load due to a cascaded design.

**Summary**

It is an object to overcome these and other drawbacks of the prior art.

The foregoing and other objects are achieved by the features of the independent claims. Further implementation forms are apparent from the dependent claims, the description and the figures.

According to a first aspect, an integrated boost-sepic converter is provided. The converter comprises a first inductance and a voltage control element, arranged serially between an input potential and a ground potential of the converter. The converter further comprises a first capacitance and a second inductance, arranged serially in parallel to the voltage control element. The converter further comprises a first diode, arranged between a first low-voltage output potential of the converter and a common potential of the first capacitance and the second inductance. The converter further comprises a second diode, arranged between a second low-voltage output potential of the converter and a common potential of the first inductance and the voltage control element. The converter is configured to regulate the first low-voltage output potential of the converter in dependence of the input potential of the converter; and to provide the second low-voltage output potential of the converter as a sum of the input potential and the first low-voltage output potential.

The voltage control element of the converter may comprise a switching regulator, configured to regulate the voltage across the same in dependence of a measurement value of the first low-voltage output potential of the converter.

The voltage control element of the converter may comprise a metal oxide semiconductor field effect transistor, MOSFET, and the converter may further comprise a control circuit. The control circuit may be configured to generate a duty cycle signal for the voltage control element in dependence of a control error between a setpoint value and a measurement value of the first low-voltage output potential of the converter and in accordance with a discontinuous conduction mode, DCM, operation, and to regulate the first low-voltage output potential of the converter in dependence of the input potential of the converter, the duty cycle signal and a switching period for the voltage control element, the first inductance, the second inductance, and an ohmic resistance of a first low-voltage load circuit.

According to a second aspect, a low-voltage power supply, LVPS for an emergency LED driver is provided. The LVPS comprises a battery charger, arranged between an input potential and a battery potential of the LVPS. The LVPS further comprises a converter according to the first aspect, the input potential of the LVPS connected to the input potential of the converter. The LVPS further comprises a control circuit, configured to generate the battery potential of the LVPS from the input potential of the LVPS, and to pull up the input potential of the converter to the battery potential of the LVPS upon a failure of the input potential of the LVPS.

The LVPS may further comprise a pull-down switch and a pull-up switch, the pull-up switch configured to pull up the input potential of the converter to the battery potential of the LVPS in accordance with a pull-down of its control potential to the ground potential of the LVPS by the pull-down switch upon the failure of the input potential of the LVPS.

The battery charger of the LVPS may comprise a step-down converter.

According to a third aspect, a low-voltage power supply, LVPS for an emergency LED driver is provided. The LVPS comprises a battery charger, arranged between an input potential and a battery potential of the LVPS. The LVPS further comprises a converter according to the first aspect, the battery potential of the LVPS connected to the input potential of the converter, the input potential of the LVPS connected to a cathode potential of the first diode. The LVPS further comprises a low-dropout, LDO, regulator, arranged between the input potential of the LVPS and the first low-voltage output potential of the converter, and configured to regulate the first low-voltage output potential in dependence of the input potential of the LVPS. The LVPS further comprises a control circuit, configured to generate the battery potential of the LVPS from the input potential of the LVPS, and to regulate, upon a failure of the input potential of the LVPS, the first low-voltage output potential of the converter to exceed a setpoint value of the first low-voltage output potential by at least a dropout voltage of the LDO regulator.

The battery charger of the LVPS may comprise a step-down converter.

According to a fourth aspect, a low-voltage power supply, LVPS for an emergency LED driver is provided. The LVPS comprises a battery charger, arranged between an input potential and a battery potential of the LVPS. The LVPS further comprises a converter according to the first aspect, the input potential of the LVPS connected via a first zener diode to the input potential of the converter. The LVPS further comprises the first zener diode, configured to pull up the input potential of the converter to the input potential of the LVPS upon a settling of the input potential of the LVPS. The LVPS further comprises a control circuit, configured to generate the battery potential of the LVPS from the input potential of the LVPS, to pull up the first low-voltage output potential of the converter to the input potential of the LVPS upon the settling of the input potential of the LVPS, and to pull up the input potential of the converter to the battery potential of the LVPS upon a failure of the input potential of the LVPS.

The LVPS may further comprise a first pull-down switch and a first pull-up switch, the first pull-up switch configured to pull up the input potential of the converter to the battery potential of the LVPS in accordance with a pull-down of its control potential to the ground potential of the LVPS by the first pull-down switch upon the failure of the input potential of the LVPS.

The LVPS may further comprise a second pull-down switch and a second pull-up switch, the second pull-up switch configured to pull up the first low-voltage output potential of the converter to the input potential of the LVPS in accordance with a pull-down of its control potential to the ground potential of the LVPS by the second pull-down switch upon the settling of the input potential of the LVPS.

The battery charger of the LVPS may comprise a step-down converter.

According to a fifth aspect, a low-voltage power supply, LVPS for an emergency LED driver is provided. The LVPS comprises a battery charging switch, arranged between an input potential and a battery potential of the LVPS, and configured to operate an embedded battery charger. The LVPS further comprises a converter according to claim 3, the battery potential of the LVPS connected to the input potential of the converter. The LVPS further comprises a low-dropout, LDO, regulator, arranged between the input potential of the LVPS and the first low-voltage output potential of the converter, and configured to regulate the first low-voltage output potential in dependence of the input potential of the LVPS. The LVPS further comprises a control circuit, configured to generate the battery potential of the LVPS from the input potential of the LVPS.

The embedded battery charger of the LVPS may comprise a step-down converter.

According to a sixth aspect, an emergency LED driver is provided, comprising a low-voltage power supply, LVPS according to any one of the second to fifth aspects.

## Advantageous Effects

The present disclosure proposes an integrated boost-sepic design as a basis for various LVPS topologies for supplying power to a microcontroller and a gate driver in an emergency LED driver. Several of these do not rely on switching regulator chips, therefore are fully discrete and robust designs with respect to the supply chain.

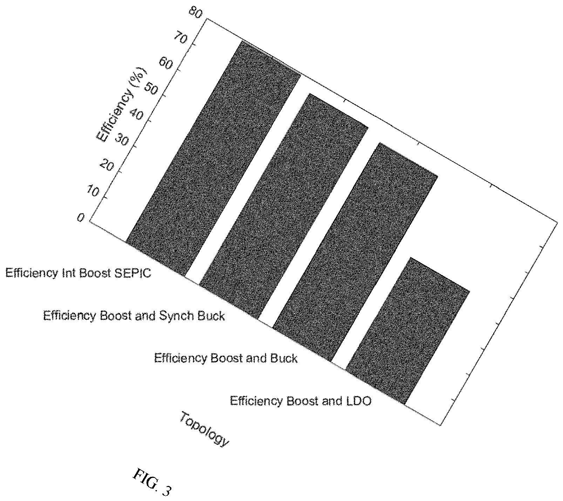

The proposed non-cascaded design (see FIG. 2) results in efficient conversion (see FIG. 3). The efficiency matches that of the cascaded boost and synchronous buck.

Depending on the particular LVPS topology there are various economic benefits:

- Zener Boot Design (see FIG. 2C): All components are discrete, therefore no supply chain issues due to dependency on chips.
- Zener Boot Design (see FIG. 2C), LDO Fed Design (see FIG. 2B), and Multi Port Design (see FIG. 2D): High efficiency at a low cost due to discrete components and cheap/prevalent LDO.
- Switching Regulator Design (see FIG. 2A): High efficiency, cost is lower than previous cascaded boost and synchronous buck designs.

## Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

FIG. 1 illustrates an LVPS in accordance with prior art;

FIG. 2 illustrates an LVPS in accordance with the present disclosure;

FIG. 3 illustrates a comparison of efficiencies of various LVPSs;

FIG. 4 illustrates an integrated boost-sepic converter in accordance with the present disclosure; and

FIGs. 5-8 illustrate various LVPSs in accordance with the present disclosure.

**Detailed Descriptions of Drawings**

In the following description, reference is made to the accompanying drawings, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

FIG. 1 illustrates an LVPS in accordance with the prior art.

Note that cascaded boost and synchronous buck (or LDO) topologies are used to generate a regulated voltage (e.g., 3.3V) and a boosted voltage (e.g., 6V) from a battery voltage (e.g., 2.7-3.6V). The boost converter is bidirectional and can operate as a buck converter in the reverse direction to charge the battery.

FIG. 2 illustrates an LVPS 2A-2D in accordance with the present disclosure.

Note the non-cascaded, integrated boost-sepic design underlying the LVPS 2A-2D. The sepic topology results in non-inverted buck-boost regulation, unlike a standard buck-boost converter.

FIG. 3 illustrates a comparison of efficiencies of various LVPSs.

The comparison includes the proposed integrated boost-sepic design when driven from nominal battery voltage to load, a cascaded boost and LDO design and cascaded boost and (synchronous) buck designs.

Note that the proposed integrated boost-sepic design underlying the LVPS 2A-2D matches an efficiency of the cascaded boost and synchronous buck.

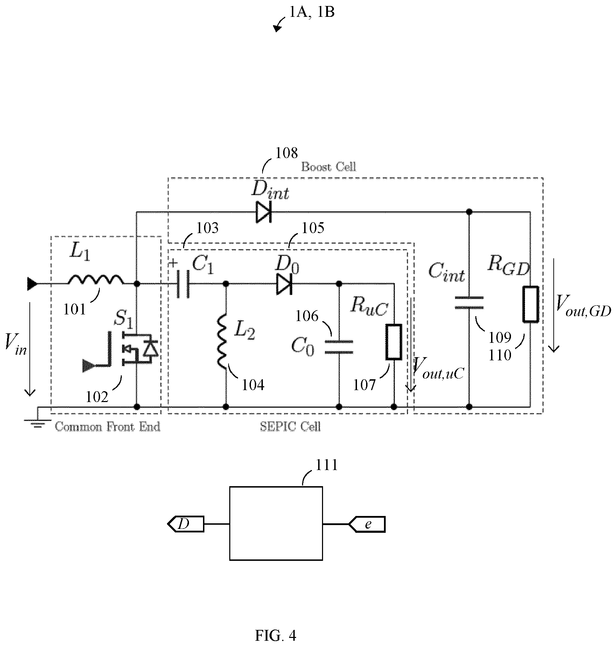

FIG. 4 illustrates an integrated boost-sepic converter 1A-1B in accordance with the present disclosure.

Note that the design includes a sepic cell, a boost cell and a common front end for both cells.

With reference to its common front end, the converter 1A, 1B comprises a first inductance 101, $L_1$ and a voltage control element 102, arranged serially between an input potential $V_{in}$ and a ground potential of the converter 1A, 1B.

With reference to its sepic cell, the converter 1A, 1B further comprises a first capacitance 103, $C_1$ and a second inductance 104, $L_2$, arranged serially in parallel to the voltage control element 102. The first inductance (101, $L_1$) and the second inductance (104, $L_2$) may or may not be coupled. The converter 1A, 1B further comprises a first diode 105, $D_0$ and may further comprise a first output capacitance 106, $C_0$ arranged serially between a common potential of the first capacitance 103, $C_1$ and the second inductance 104, $L_2$ and the ground potential of the converter 1A, 1B. Note that a first low-voltage load circuit 107, $R_{\mu C}$ connected in parallel to the first output capacitance 106, $C_0$ represents a microcontroller being supplied with a first low-voltage output potential $V_{out,\mu C}$ of the converter 1A, 1B.

With reference to its boost cell, the converter 1A, 1B further comprises a second diode 108, $D_{int}$ and may further comprise a second output capacitance 109, $C_{int}$, serially arranged between a common potential of the first inductance 101, $L_1$ and the voltage control element 102, $S_1$ (as well as the first capacitance 103, $C_1$) and the ground potential of the converter 1A, 1B. Note that a second low-voltage load circuit 110, $R_{GD}$ connected in parallel to the second output

capacitance 109, $C_{int}$ represents a gate driver being supplied with a second low-voltage output potential $V_{out,GD}$ of the converter 1A, 1B.

Based on a duty cycle signal D (i.e., a pulse-width modulation, PWM, signal having a duty cycle D = $\tau/T$), the converter 1A, 1B is configured to regulate the first low-voltage output potential $V_{out,\mu C}$ of the converter 1A, 1B in dependence of the input potential $V_{in}$ of the converter 1A, 1B, and to provide the second low-voltage output potential $V_{out,GD} = V_{in} + V_{out,\mu C}$ of the converter 1A, 1B as a sum of the input potential $V_{in}$ and the first low-voltage output potential $V_{out,\mu C}$.

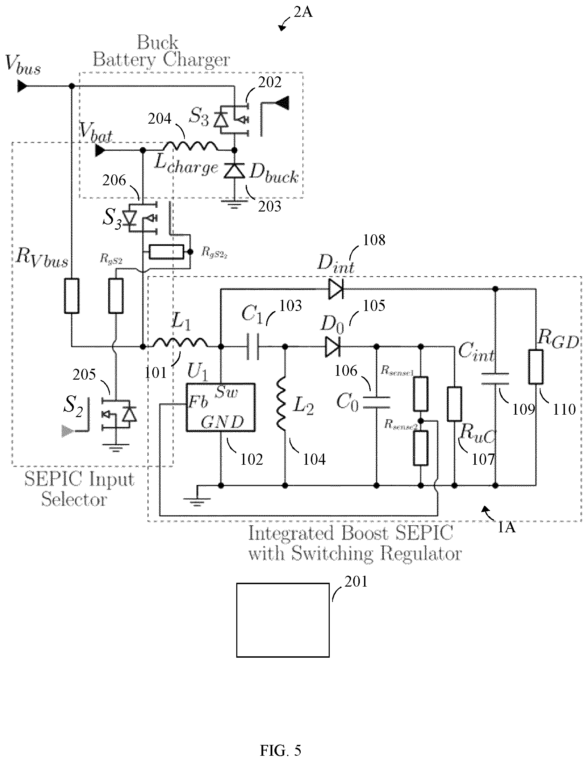

In accordance with an implementation option (e.g., see FIG. 5), the voltage control element 102 of the converter 1A may comprise a switching regulator 102, $U_1$, configured to regulate the voltage across the same in dependence of a measurement value $V_{out,\mu C,meas}$ of the first low-voltage output potential $V_{out,\mu C}$ of the converter 1A.

In accordance with an alternative implementation option (e.g., see FIG. 4), the voltage control element 102 of the converter 1B may comprise a metal oxide semiconductor field effect transistor, MOSFET, switch 102, $S_1$, and the converter 1B may further comprise a control circuit 111, such as a microcontroller and/or an ASIC.

The control circuit 111 may be configured to generate a duty cycle signal D for the voltage control element 102, $S_1$ in dependence of a control error e = $V_{out,\mu C,ref}$ - $V_{out,\mu C,meas}$ between a setpoint value $V_{out,\mu C,ref}$ and a measurement value $V_{out,\mu C,meas}$ of the first low-voltage output potential $V_{out,\mu C}$ of the converter 1B and in accordance with a discontinuous conduction mode, DCM, operation, and to regulate the first low-voltage output potential $V_{out,\mu C}$ of the converter 1 in dependence of the input potential $V_{in}$ of the converter 1B, the duty cycle signal D and a switching period T for the voltage control element 102, $S_1$, the first inductance $L_1$, the second inductance $L_2$, and an ohmic resistance $R_{\mu C}$ of a first low-voltage load circuit 107, $R_{\mu C}$.

The proposed integrated boost-sepic design allows a non-inverted, buck-boost regulated (SEPIC) output for a microcontroller ($V_{bat}$ to $R_{uC}$), and an integrated boost output for the gate drivers ($V_{bat}$ to $R_{GD}$) which is the sum of the input voltage and the SEPIC output voltage. These are powered by the battery during emergency operation, and the integrated boost-sepic converter is controlled via the voltage control element 102, $S_1$.

The sepic gain function for discontinuous current mode, DCM, operation is given by:

$$M_S = \frac{\dfrac{D^2 R_{GD} R_{uC}}{(L_1 \parallel L_2) f_s}}{R_{uC} + \sqrt{R_{uC}^2 + \left(\dfrac{4 D^2 (R_{GD} R_{uC})(R_{GD} + R_{uC})}{2 (L_1 \parallel L_2) f_s}\right)}}$$

where the duty cycle is given by D and the switching frequency by $f_s$ = 1/T.

The boost gain function is given by:

$$M_{int} = M_S + 1$$

FIG. 5 illustrates an LVPS 2A in accordance with the present disclosure.

The LVPS 2A comprises a converter 1A according to the first aspect wherein the voltage control element 102 comprises a switching regulator 102, $U_1$, configured to regulate the voltage across the same in dependence of a measurement value $V_{out,\mu C,meas}$ of the first low-voltage output potential $V_{out,\mu C}$ of the converter 1A. The measurement may involve a voltage divider $R_{sense1}$, $R_{sense2}$ arranged in parallel to the first output capacitance 106, $C_0$.

Besides the integrated boost-sepic converter with switching regulator, the design includes a battery charger cell and a sepic input selector cell.

With reference to the battery charger cell, the LVPS 2A further comprises a battery charger 202-204, $S_3$, $D_{buck}$, $L_{charge}$, arranged between an input potential $V_{bus}$ and a battery potential $V_{bat}$ of the LVPS 2A. It will be appreciated that the battery charger 202-204, $S_2$, $D_{buck}$, $L_{buck}$ may comprise a step-down ("buck") converter.

With reference to the sepic input selector cell, the LVPS 2A may further comprise a pull-down switch 205, $S_2$ and a pull-up switch 206, $S_3$. The pull-up switch 206, $S_3$ is configured to pull up the input potential $V_{in}$ of the converter 1A to the battery potential $V_{bat}$ of the LVPS 2A in accordance with a pull-down of its control potential to the ground potential of the LVPS 2A by the pull-down switch 205, $S_2$ upon a failure of the input potential $V_{in}$ of the LVPS 2A.

The input potential $V_{bus}$ of the LVPS 2A is connected to the input potential $V_{in}$ of the converter 1A, via ohmic resistance $R_{Vbus}$.

The LVPS 2A further comprises a control circuit 201, such as a microcontroller and/or an ASIC. The control circuit 201 may particularly include the control circuit 111 of the converter 1A.

The control circuit 201 is configured to generate the battery potential $V_{bat}$ of the LVPS 2A from the input potential

$V_{bus}$ of the LVPS 2A, by driving switch 202, $S_3$ with an appropriate PWM / duty cycle signal.

The control circuit 201 is further configured to pull up the input potential $V_{in}$ of the converter 1A to the battery potential $V_{bat}$ of the LVPS 2A upon the failure of the input potential $V_{in}$ of the LVPS 2A, by driving the pull-down switch 205, $S_2$ with an appropriate signal.

In mains mode, the sepic receives the input potential $V_{bus}$ of the LVPS 2A via the ohmic resistance $R_{Vbus}$, which acts as a buffer to prevent a short circuit between the battery potential $V_{bat}$ and the input potential $V_{bus}$ when the latter receives power when mains is reinstated. Switch 202, $S_3$ drives the battery charger 202-204, $S_2$, $D_{buck}$, $L_{buck}$. The switching regulator steps down the input potential $V_{bus}$ to a microcontroller compatible voltage of 3.3V.

In emergency mode, the microcontroller turns on the pull-down switch 205, $S_2$, which turns on the pull-up switch 206, $S_3$ and hence connects the battery potential $V_{bat}$ to the sepic input. The sepic is then fed by the battery for maximum efficiency. When the input potential $V_{bus}$ provides power again, the microcontroller detects the rising voltage and turns off the pull-down switch 205, $S_2$ to re-enter mains mode.

The sepic input is connected to either the input potential $V_{bus}$ or to the battery potential $V_{bat}$. Due to the use of a high frequency switching regulator chip, the sepic automatically starts on reception of input power, and can drop down from a high input potential $V_{bus}$ of 12V.

Advantages include automatic startup, low component count, tight control, overvoltage protection, no control or PWM required from the microcontroller (except for battery charging), and ability to buck down from relatively high input voltage.

Disadvantages include reliance on switching regulator chip (not being discrete), high cost compared to other designs, and reduced efficiency due to high switching frequency.

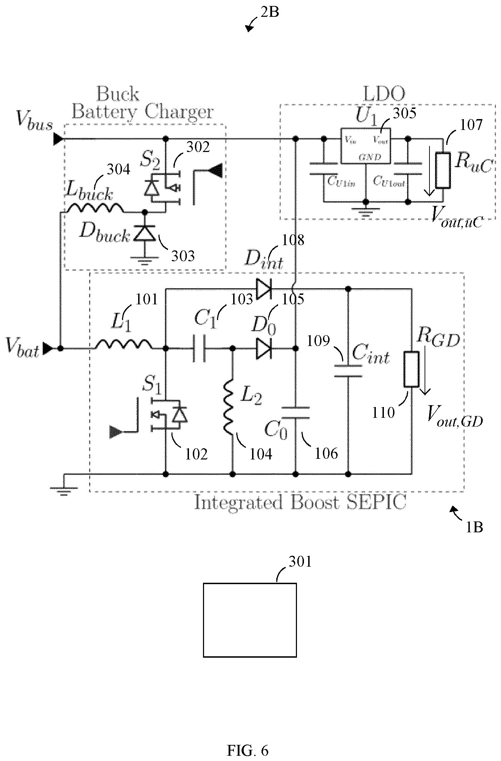

FIG. 6 illustrates an LVPS 2B in accordance with the present disclosure.

The LVPS 2B comprises a converter 1B according to the first aspect wherein the voltage control element 102 comprises a MOSFET switch 102, $S_1$ and the control circuit 111 is configured to generate the duty cycle signal D for said voltage control element 102, $S_1$ in dependence of a control error of the first low-voltage output potential $V_{out,\mu C}$. Similar to the illustration of FIG. 4, the measurement value $V_{out,\mu C,meas}$ of the first low-voltage output potential $V_{out,\mu C}$ may be derived by a voltage divider $R_{sense1}$, $R_{sense2}$ arranged in parallel to the first output capacitance 106, $C_0$.

Besides the integrated boost-sepic converter with MOSFET switch, the design includes a battery charger cell and a low-dropout, LDO, cell.

With reference to the battery charger cell, the LVPS 2B further comprises a battery charger 302-304, $S_2$, $D_{buck}$, $L_{buck}$, arranged between an input potential $V_{bus}$ and a battery potential $V_{bat}$ of the LVPS 2B. Again, it will be appreciated that the battery charger 302-304, $S_2$, $D_{buck}$, $L_{buck}$ of the LVPS 2B comprises a step-down converter.

The battery potential $V_{bat}$ of the LVPS 2B is connected to the input potential $V_{in}$ of the converter 1B.

The input potential $V_{bus}$ of the LVPS 2B is connected to a cathode potential of the first diode 105, $D_0$.

With reference to the LDO cell, the LVPS 2B further comprises an LDO regulator 305, $U_1$, arranged between the input potential $V_{bus}$ of the LVPS 2B and the first low-voltage output potential $V_{out,\mu C}$ of the converter 1B, enclosed by capacitors $C_{U1in}$, $C_{U1out}$ and configured to regulate the first low-voltage output potential $V_{out,\mu C}$ in dependence of the input potential $V_{bus}$ of the LVPS 2B.

The LVPS 2B further comprises a control circuit 301, such as a microcontroller and/or an ASIC. The control circuit 301 may particularly include the control circuit 111 of the converter 1B.

The control circuit 301 is configured to generate the battery potential $V_{bat}$ of the LVPS 2B from the input potential $V_{bus}$ of the LVPS 2B, by driving switch 302, $S_2$ with an appropriate PWM / duty cycle signal.

The control circuit 301 is further configured to regulate, upon a failure of the input potential $V_{in}$ of the LVPS 2B, the first low-voltage output potential $V_{out,\mu C} = V_{out,\mu C,ref} + V_{dropout,LDO}$ of the converter 1B to exceed a setpoint value $V_{out,\mu C,ref}$ of the first low-voltage output potential $V_{out,\mu C}$ by at least a dropout voltage $V_{dropout,LDO}$ of the LDO regulator 305, $U_1$ (being required to maintain its stable operation).

In mains mode, the sepic is inactive. The input potential $V_{bus}$ supplies power to the LDO regulator 305, $U_1$, which provides a microcontroller compatible voltage of 3.3V. Switch 302, $S_2$ drives the battery charger 302-304, $S_2$, $D_{buck}$, $L_{buck}$.

In emergency mode, the sepic is driven by the microcontroller, with input power from the battery. The microcontroller begins driving MOSFET switch 102, $S_1$, which generates the microcontroller compatible voltage of 3.3V plus the dropout voltage $V_{dropout,LDO}$ (around 3.9V in total) on the sepic output, feeding the LDO regulator 305, $U_1$ with a lower input voltage relative to known cascaded boost and LDO designs (around 6V). The lower voltage feeding of the LDO compared to the usual boost voltage means lower loss. When the input potential $V_{bus}$ provides power again, the microcontroller stops driving the MOSFET switch 102, $S_1$ and the LDO regulator 305, $U_1$ is again powered by the input potential $V_{bus}$, entering mains mode again.

Advantages include automatic startup, low component count, tight control, and overvoltage protection.

Disadvantages include reliance on LDO (not being discrete), reduced efficiency due to LDO dropout, higher voltage to gate driver due to LDO dropout, and control and PWM from microcontroller.

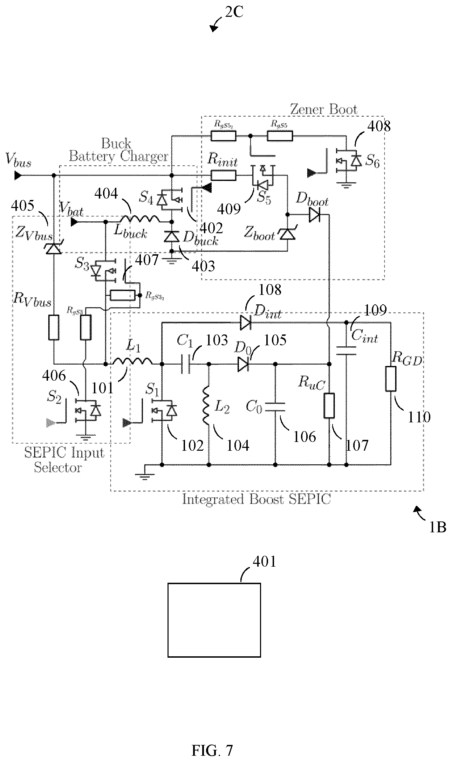

FIG. 7 illustrates an LVPS 2C in accordance with the present disclosure.

The LVPS 2C comprises a converter 1B according to the first aspect wherein the voltage control element 102 comprises a MOSFET switch 102, $S_1$ and the control circuit 111 is configured to generate the duty cycle signal D for said voltage control element 102, $S_1$ in dependence of a control error of the first low-voltage output potential $V_{out,\mu C}$. Similar to the illustration of FIG. 4, the measurement value $V_{out,\mu C,meas}$ of the first low-voltage output potential $V_{out,\mu C}$ may be derived by a voltage divider $R_{sense1}$, $R_{sense2}$ arranged in parallel to the first output capacitance 106, $C_0$.

Besides the integrated boost-sepic converter with MOSFET switch, the design includes a battery charger cell, a sepic input selector cell and a zener boot cell.

With reference to the battery charger cell, the LVPS 2C further comprises a battery charger 402-404, $S_2$, $D_{buck}$, $L_{buck}$, arranged between an input potential $V_{bus}$ and a battery potential $V_{bat}$ of the LVPS 2C. It will be appreciated that the battery charger 402-404, $S_2$, $D_{buck}$, $L_{buck}$ of the LVPS 2C comprises a step-down converter.

The input potential $V_{bus}$ of the LVPS 2C is connected to the input potential $V_{in}$ of the converter 1B, via a first zener diode 405, $Z_{Vbus}$. The first zener diode 405, $Z_{Vbus}$ is configured to pull up the input potential $V_{in}$ of the converter 1B to the input potential $V_{bus}$ of the LVPS 2C upon a settling of the input potential $V_{in}$ of the LVPS 2C.

With reference to the zener boot cell, the LVPS 2C may further comprise a second pull-down switch 408, $S_6$ and a second pull-up switch 409, $S_5$, the second pull-up switch 409, $S_5$ configured to pull up the first low-voltage output potential $V_{out,\mu C}$ of the converter 1B to the input potential $V_{bus}$ of the LVPS 2C in accordance with a pull-down of its control potential to the ground potential of the LVPS 2C by the second pull-down switch 408, $S_6$ upon the settling of the input potential $V_{in}$ of the LVPS 2C.

Note that pulling up the first low-voltage output potential $V_{out,\mu C}$ of the converter 1B to the input potential $V_{bus}$ of the LVPS 2C may mean that when the second pull-up switch 409, $S_5$ is on, the first low-voltage output potential $V_{out,\mu C}$ of the converter 1B will be fed at a potential of the value of $Z_{boot}$ minus the forward voltage of $D_{boot}$. Therefore the first low-voltage output potential $V_{out,\mu C}$ will not exactly equal the value of the input potential $V_{bus}$ due to the voltage drop across resistor $R_{init}$.

With reference to the sepic input selector cell, the LVPS 2C may further comprise a first pull-down switch 406, $S_2$ and a first pull-up switch 407, $S_3$, the first pull-up switch 407, $S_3$ configured to pull up the input potential $V_{in}$ of the converter 1B to the battery potential $V_{bat}$ of the LVPS 2C in accordance with a pull-down of its control potential to the ground potential of the LVPS 2C by the first pull-down switch 406, $S_2$ upon a failure of the input potential $V_{in}$ of the LVPS 2C.

The LVPS 2C further comprises a control circuit 401, such as a microcontroller and/or an ASIC. The control circuit 401 may particularly include the control circuit 111 of the converter 1B.

The control circuit 401 is configured to generate the battery potential $V_{bat}$ of the LVPS 2C from the input potential $V_{bus}$ of the LVPS 2C, by driving switch 402, $S_4$ with an appropriate PWM / duty cycle signal.

The control circuit 401 is further configured to pull up the input potential $V_{in}$ of the converter 1B to the battery potential $V_{bat}$ of the LVPS 2C upon the failure of the input potential $V_{in}$ of the LVPS 2C, by driving the pull-down switch 406, $S_2$ with an appropriate signal.

The control circuit 401 is further configured to pull up the first low-voltage output potential $V_{out,\mu C}$ of the converter 1B to the input potential $V_{bus}$ of the LVPS 2C upon the settling of the input potential $V_{in}$ of the LVPS 2C, by driving the pull-down switch 408, $S_6$ with an appropriate signal.

When the input potential $V_{bus}$ is first powered, the first zener diode 405, $Z_{Vbus}$ is used to regulate 2.7V and initially power the microcontroller. The zener boot cell powers the microcontroller, enabling it to drive the MOSFET switch 102, $S_1$ and generate the stable microcontroller compatible voltage of 3.3V to take over and supply power to the microcontroller.

In mains mode, the input to the sepic is from the input potential $V_{bus}$ via the zener diode 405, $Z_{Vbus}$, which drops the input potential $V_{bus}$ to allow better control on the sepic (i.e., the sepic cannot regulate 3.3V well from a higher voltage input). The microcontroller then turns on pull-down switch 406, $S_2$ which pulls down the gate of the second pull-up switch 409, $S_5$ turning it off, isolating power to the zener diode 405, $Z_{Vbus}$ to reduce power loss. Switch 402, $S_4$ drives the battery charger 402-404, $S_2$, $D_{buck}$, $L_{buck}$.

In emergency mode, the SEPIC receives power directly from the battery. To this end, the microcontroller turns on the pull-down switch 406, $S_2$ which turns on the first pull-up switch 407, $S_3$, hence shorting the battery potential $V_{bat}$ to the SEPIC input for maximum efficiency. When the input potential $V_{bus}$ provides power again, the microcontroller detects the rising voltage and turns off the pull-down switch 406, $S_2$ to re-enter mains mode.

Advantages include low cost, high efficiency, and no chip-based component reliance (switching regulator, LDO).

Disadvantages include high component count, no tight voltage regulation due to microcontroller based control and hence risk of overvoltage on microcontroller, and large PCB footprint due to high component count.

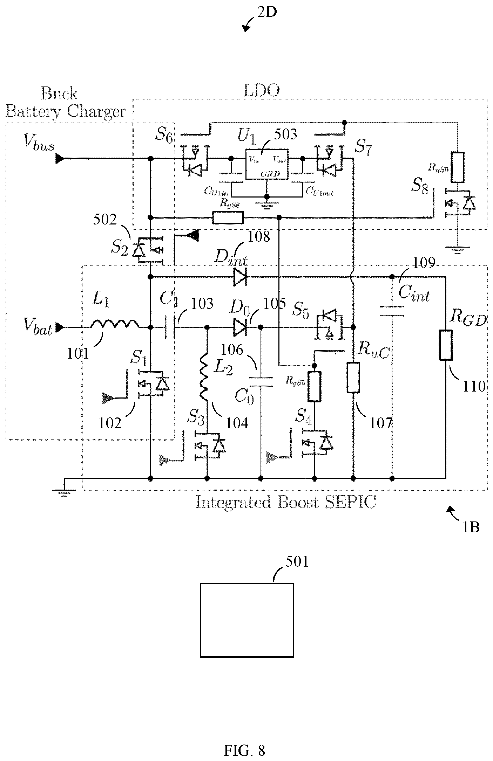

FIG. 8 illustrates an LVPS 2D in accordance with the present disclosure.

The LVPS 2D comprises a converter 1B according to the first aspect, wherein the voltage control element 102 comprises a MOSFET switch 102, $S_1$ and the control circuit 111 is configured to generate the duty cycle signal D for said voltage control element 102, $S_1$ in dependence of a control error of the first low-voltage output potential $V_{out,\mu C}$ Reference is made to the illustration of FIG. 4, according to which the measurement value $V_{out,\mu C,meas}$ of the first low-voltage output potential $V_{out,\mu C}$ may be derived by a voltage divider $R_{sense1}$, $R_{sense2}$ arranged in parallel to the first output capacitance

106, $C_0$.

Besides the integrated boost-sepic converter with MOSFET switch, the design includes an embedded battery charger cell and a low-dropout, LDO, cell.

With reference to the embedded battery charger cell, the LVPS 2D further comprises a battery charging switch 502, $S_2$, arranged between an input potential $V_{bus}$ and a battery potential $V_{bat}$ of the LVPS 2D, and configured to operate an embedded battery charger 502, 102, 101, $S_2$, $S_1$, $L_1$. The embedded battery charger 502, 102, 101, $S_2$, $S_1$, $L_1$ of the LVPS 2D may comprise a step-down converter. Note that the body diode of the MOSFET switch 102, $S_1$ is configured to serve as a rectifying element, replacing the usual diode.

The battery potential $V_{bat}$ of the LVPS 2D is connected to the input potential $V_{in}$ of the converter 1B.

With reference to the LDO cell, the LVPS 2D further comprises an LDO regulator 503, $U_1$, arranged between the input potential $V_{bus}$ of the LVPS 2D and the first low-voltage output potential $V_{out,\mu C}$ of the converter 1B, enclosed by capacitors $C_{U1in}$, $C_{U1out}$ and configured to regulate the first low-voltage output potential $V_{out,\mu C}$ in dependence of the input potential $V_{bus}$ of the LVPS 2D. The LVPS 2D may further comprise switches $S_6$, $S_7$, $S_8$ configured to enable the LDO cell via ohmic resistance $R_{gS8}$, upon a settling of the input potential $V_{in}$ of the LVPS 2D.

The LVPS 2D further comprises a control circuit 501, such as a microcontroller and/or an ASIC. The control circuit 501 may particularly include the control circuit 111 of the converter 1B.

The control circuit 501 is configured to generate the battery potential $V_{bat}$ of the LVPS 2D from the input potential $V_{bus}$ of the LVPS 2D, by driving the battery charging switch 502, $S_2$ with an appropriate PWM / duty cycle signal.

When the input potential $V_{bus}$ is powered, switch $S_8$ is pulled high, turning it on in addition to switches $S_6$ and $S_7$, enabling the LDO regulator 503, $U_1$ to receive power from the input potential $V_{bus}$ and to supply 3.3V to the microcontroller. The battery charging switch 502, $S_2$ drives the embedded battery charger 502, 102, 101, $S_2$, $S_1$, $L_1$, using the body diode of the MOSFET switch 102, $S_1$ for freewheeling. Switches $S_3$, $S_4$ and $S_5$ are turned off, preventing interference of the sepic's passive components. In mains mode, the microcontroller is powered by the LDO cell via the input potential $V_{bus}$.

When mains power fails, the microcontroller turns on the switches $S_3$, $S_4$ and $S_5$ and drives the sepic from the battery potential $V_{bat}$ using the MOSFET switch 102, $S_1$, This then supplies power to the microcontroller and gate driver, entering emergency mode. The switch $S_8$ is pulled low via the microcontroller to turn off the switches $S_6$ and $S_7$, isolating the LDO cell to reduce power loss. During emergency mode, the microcontroller and gate drivers are powered by the boost-sepic converter. The sepic and the buck charger share a common inductor $L_1$, as such the topology is multiport and configurable, using configuration MOSFETs. When the input potential $V_{bus}$ provides power again, the switches $S_6$, $S_7$ and $S_8$ again turn on to use the LDO cell, and the switches $S_3$, $S_4$ and $S_5$ turn off, re-entering mains mode.

Advantages include low cost, and high efficiency.

Disadvantages include high component count, no tight voltage regulation in emergency mode due to microcontroller based control and hence risk of overvoltage on microcontroller, and large PCB footprint due to high component count.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1. An integrated boost-sepic converter (1A, 1B), comprising

- a first inductance (101, $L_1$) and a voltage control element (102), arranged serially between an input potential ($V_{in}$) and a ground potential of the converter (1A, 1B);
- a first capacitance (103, $C_1$) and a second inductance (104, $L_2$), arranged serially in parallel to the voltage control element (102);
- a first diode (105, $D_0$), arranged between a first low-voltage output potential ($V_{out,\mu C}$) of the converter (1A, 1B) and a common potential of the first capacitance (103, $C_1$) and the second inductance (104, $L_2$); and
- a second diode (108, $D_{int}$), arranged between a second low-voltage output potential ($V_{out,GD}$) of the converter (1A, 1B) and a common potential of the first inductance (101, $L_1$) and the voltage control element (102, $S_1$);

the converter (1A, 1B) configured to

- regulate the first low-voltage output potential ($V_{out,\mu C}$) of the converter (1A, 1B) in dependence of the input potential ($V_{in}$) of the converter (1A, 1B); and
- provide the second low-voltage output potential ($V_{out,GD} = V_{in} + V_{out,\mu C}$) of the converter (1A, 1B) as a sum of the input potential ($V_{in}$) and the first low-voltage output potential ($V_{out,\mu C}$).

2. The converter (1A) of claim 1,
the voltage control element (102) comprising a switching regulator (102, $U_1$), configured to regulate the voltage across the same in dependence of a measurement value ($V_{out,\mu Cmeas}$) of the first low-voltage output potential ($V_{out,\mu C}$) of the converter (1A).

3. The converter (1B) of claim 1,

the voltage control element (102) comprising a metal oxide semiconductor field effect transistor, MOSFET (102, $S_1$); and
the converter (1B) further comprising a control circuit (111), configured to

- generate a duty cycle signal (D) for the voltage control element (102, $S_1$) in dependence of a control error (e = $V_{out,\mu C,ref}$ - $V_{out,\mu C,meas}$) between a setpoint value ($V_{out,\mu C,ref}$) and a measurement value ($V_{out,\mu C,meas}$) of the first low-voltage output potential ($V_{out,\mu C}$) of the converter (1B) and in accordance with a discontinuous conduction mode, DCM, operation; and
- regulate the first low-voltage output potential ($V_{out,\mu C}$) of the converter (1) in dependence of the input potential ($V_{in}$) of the converter (1B), the duty cycle signal (D) and a switching period (T) for the voltage control element (102, $S_1$), the first inductance ($L_1$), the second inductance ($L_2$), and an ohmic resistance ($R_{\mu C}$) of a first low-voltage load circuit (107, $R_{\mu C}$).

4. A low-voltage power supply, LVPS (2A) for an emergency LED driver, comprising

- a battery charger (202-204, $S_3$, $D_{buck}$, $L_{charge}$), arranged between an input potential ($V_{bus}$) and a battery potential ($V_{bat}$) of the LVPS (2A);
- a converter (1A) according to claim 2, the input potential ($V_{bus}$) of the LVPS (2A) connected to the input potential ($V_{in}$) of the converter (1A); and
- a control circuit (201), configured to

- generate the battery potential ($V_{bat}$) of the LVPS (2A) from the input potential ($V_{bus}$) of the LVPS (2A); and
- pull up the input potential ($V_{in}$) of the converter (1A) to the battery potential ($V_{bat}$) of the LVPS (2A) upon a failure of the input potential ($V_{bus}$) of the LVPS (2A).

5. The LVPS (2A) of claim 4, further comprising

- a pull-down switch (205, $S_2$) and a pull-up switch (206, $S_3$), the pull-up switch (206, $S_3$) configured to pull up the input potential ($V_{in}$) of the converter (1A) to the battery potential ($V_{bat}$) of the LVPS (2A) in accordance with a pull-down of its control potential to the ground potential of the LVPS (2A) by the pull-down switch (205, $S_2$) upon the failure of the input potential ($V_{bus}$) of the LVPS (2A).

6. The LVPS (2A) of claim 4 or claim 5,
the battery charger (202-204, $S_2$, $D_{buck}$, $L_{buck}$) comprising a step-down converter.

7. A low-voltage power supply, LVPS (2B) for an emergency LED driver, comprising

- a battery charger (302-304, $S_2$, $D_{buck}$, $L_{buck}$), arranged between an input potential ($V_{bus}$) and a battery potential ($V_{bat}$) of the LVPS (2B);
- a converter (1B) according to claim 3, the battery potential ($V_{bat}$) of the LVPS (2B) connected to the input potential ($V_{in}$) of the converter (1B), the input potential ($V_{bus}$) of the LVPS (2B) connected to a cathode potential of the first diode (105, $D_0$);
- a low-dropout, LDO, regulator (305, $U_1$), arranged between the input potential ($V_{bus}$) of the LVPS (2B) and the first low-voltage output potential ($V_{out,\mu C}$) of the converter (1B), and configured to regulate the first low-voltage

9

output potential ($V_{out,\mu C}$) in dependence of the input potential ($V_{bus}$) of the LVPS (2B); and

a control circuit (301), configured to

- generate the battery potential ($V_{bat}$) of the LVPS (2B) from the input potential ($V_{bus}$) of the LVPS (2B); and
- regulate, upon a failure of the input potential ($V_{bus}$) of the LVPS (2B), the first low-voltage output potential ($V_{out,\mu C}$ = $V_{out,\mu C,ref}$ + $V_{dropout,LDO}$) of the converter (1B) to exceed a setpoint value ($V_{out,\mu C,ref}$) of the first low-voltage output potential ($V_{out,\mu C}$) by at least a dropout voltage ($V_{dropout,LDO}$) of the LDO regulator (305, $U_1$).

8. The LVPS (2B) of claim 7,
the battery charger (302-304, $S_2$, $D_{buck}$, $L_{buck}$) comprising a step-down converter.

9. A low-voltage power supply, LVPS (2C) for an emergency LED driver, comprising

- a battery charger (402-404, $S_2$, $D_{buck}$, $L_{buck}$), arranged between an input potential ($V_{bus}$) and a battery potential ($V_{bat}$) of the LVPS (2C);
- a converter (1B) according to claim 3, the input potential ($V_{bus}$) of the LVPS (2C) connected via a first zener diode ($Z_{Vbus}$) to the input potential ($V_{in}$) of the converter (1B);
- the first zener diode (405, $Z_{Vbus}$), configured to pull up the input potential ($V_{in}$) of the converter (1B) to the input potential ($V_{bus}$) of the LVPS (2C) upon a settling of the input potential ($V_{bus}$) of the LVPS (2C); and
- a control circuit (401), configured to

    - generate the battery potential ($V_{bat}$) of the LVPS (2C) from the input potential ($V_{bus}$) of the LVPS (2C);
    - pull up the first low-voltage output potential ($V_{out,\mu C}$) of the converter (1B) to the input potential ($V_{bus}$) of the LVPS (2C) upon the settling of the input potential ($V_{bus}$) of the LVPS (2C); and
    - pull up the input potential ($V_{in}$) of the converter (1B) to the battery potential ($V_{bat}$) of the LVPS (2C) upon a failure of the input potential ($V_{bus}$) of the LVPS (2C).

10. The LVPS (2C) of claim 9, further comprising

- a first pull-down switch (406, $S_2$) and a first pull-up switch (407, $S_3$), the first pull-up switch (407, $S_3$) configured to pull up the input potential ($V_{in}$) of the converter (1B) to the battery potential ($V_{bat}$) of the LVPS (2C) in accordance with a pull-down of its control potential to the ground potential of the LVPS (2C) by the first pull-down switch (406, $S_2$) upon the failure of the input potential ($V_{bus}$) of the LVPS (2C).

11. The LVPS (2C) of claim 9 or claim 10, further comprising

- a second pull-down switch (408, $S_6$) and a second pull-up switch (409, $S_5$), the second pull-up switch (409, $S_5$) configured to pull up the first low-voltage output potential ($V_{out,\mu C}$) of the converter (1B) to the input potential ($V_{bus}$) of the LVPS (2C) in accordance with a pull-down of its control potential to the ground potential of the LVPS (2C) by the second pull-down switch (408, $S_6$) upon the failure of the input potential ($V_{bus}$) of the LVPS (2C).

12. The LVPS (2C) of any one of the claims 9 to 11,
the battery charger (402-404, $S_2$, $D_{buck}$, $L_{buck}$) comprising a step-down converter.

13. A low-voltage power supply, LVPS (2D) for an emergency LED driver, comprising

- a battery charging switch (502, $S_2$), arranged between an input potential ($V_{bus}$) and a battery potential ($V_{bat}$) of the LVPS (2D), and configured to operate an embedded battery charger (502, 102, 101, $S_2$, $S_1$, $L_1$);
- a converter (1B) according to claim 3, the battery potential ($V_{bat}$) of the LVPS (2D) connected to the input potential ($V_{in}$) of the converter (1B);
- a low-dropout, LDO, regulator (503, $U_1$), arranged between the input potential ($V_{bus}$) of the LVPS (2D) and the first low-voltage output potential ($V_{out,\mu C}$) of the converter (1B), and configured to regulate the first low-voltage output potential ($V_{out,\mu C}$) in dependence of the input potential ($V_{bus}$) of the LVPS (2D);
- a control circuit (501), configured to

    - generate the battery potential ($V_{bat}$) of the LVPS (2D) from the input potential ($V_{bus}$) of the LVPS (2D).

**14.** The LVPS (2D) of claim 13,
the embedded battery charger (502, 102, 101, $S_2$, $S_1$, $L_1$) comprising a step-down converter.

**15.** An emergency LED driver, comprising
a low-voltage power supply, LVPS (2A-2D) according to any one of the claims 4 to 14.

FIG. 1 (Prior art)

FIG. 2

FIG. 3

1A, 1B

FIG. 4

FIG. 5

2B

Buck
Battery Charger

LDO

$V_{bus}$

$S_2$ 302

304

$L_{buck}$

$D_{buck}$ 303

$U_1$ 305

$V_{in}$  $V_{out}$

GND

$C_{U1in}$  $C_{U1out}$

107

$R_{uC}$

$V_{out,uC}$

108

$D_{int}$

101 103 105

$L_1$  $C_1$  $D_0$

$V_{bat}$

$S_1$

102

$L_2$

104

$C_0$

106

109

$C_{int}$

$R_{GD}$

110

$V_{out,GD}$

Integrated Boost SEPIC

1B

301

FIG. 6

FIG. 7

FIG. 8

Europäisches
Patentamt

European
Patent Office

Office européen
des brevets

## EUROPEAN SEARCH REPORT

**Application Number**

EP 24 16 4336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DURÁN ELADIO ET AL: "Configurations of DC-DC converters of one input and multiple outputs without transformer", IET POWER ELECTRONICS, IET, UK, vol. 13, no. 12, 16 September 2020 (2020-09-16), pages 2658-2670, XP006092269, ISSN: 1755-4535, DOI: 10.1049/IET-PEL.2019.1251 | 1-3,15 | INV. H02M1/00 H02M3/155 H02M3/158 H02M1/32 H02M1/36 H02M1/10 |
| Y | * abstract * * sections 1-5; figures 1-16 * | 4-14 | |
| Y | EP 2 810 535 B1 (TRIDONIC UK LTD [GB]) 8 January 2020 (2020-01-08) * abstract * * paragraph [0001] - paragraph [0060]; figures 1-6 * | 4-14 | |

TECHNICAL FIELDS
SEARCHED      (IPC)

H02M

The present search report has been drawn up for all claims

| Place of search | Date of completion of the search | Examiner |
|---|---|---|
| The Hague | 20 August 2024 | Adami, Salah-Eddine |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

## ANNEX TO THE EUROPEAN SEARCH REPORT
## ON EUROPEAN PATENT APPLICATION NO.

EP 24 16 4336

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2024

| Patent document cited in search report | | Publication date | Patent family member(s) | | Publication date |
|---|---|---|---|---|---|
| EP 2810535 | B1 | 08-01-2020 | CN | 104081881 A | 01-10-2014 |
| | | | EP | 2810535 A1 | 10-12-2014 |
| | | | GB | 2499016 A | 07-08-2013 |
| | | | US | 2015008844 A1 | 08-01-2015 |
| | | | WO | 2013113888 A1 | 08-08-2013 |

EPO FORM P0459

For more details about this annex : see Official Journal of the European Patent Office, No. 12/82